# EUROPEAN PATENT SPECIFICATION

(11) **EP 4 158 519 B1**
(45) Date of publication and mention of the grant of the patent: **28.01.2026**
(21) Application number: 21812170.5
(22) Date of filing: 23.04.2021
(51) Int. Cl.: G06F 21/62, G06F 9/455, G06F 21/53, G06F 21/60, H04L 9/40, H04W 12/086

(54) **GENERATION OF CONTAINER PROTECTION PROFILES**
ERZEUGUNG VON BEHÄLTERSCHUTZPROFILEN
GÉNÉRATION DE PROFILS DE PROTECTION DE CONTENEUR

(30) Priority: 29.05.2020 SE 2050617
(43) Date of publication of application: 05.04.2023
(73) Proprietor: Bifrost Security AB, 11356 STOCKHOLM (SE)
(72) Inventor: GEHRMANN, Christian, 227 38 LUND (SE); ZHU, Hui, 232 35 ARLÖV (SE)
(74) Representative: Zacco Sweden AB
(86) International application number: PCT/SE2021/050376
(87) International publication number: WO 2021/242160

(56) References cited:
- GB-A- 2 568 967
- US-A1- 2015 135 257
- US-A1- 2017 116 412
- US-A1- 2018 293 394
- US-B1- 10 298 577
- MARTIN SIMECEK: "Sharing containers from private registry in Azure", 16 July 2019 (2019-07-16), pages 1 - 8, XP093161793, Retrieved from the Internet <URL:https://codez.deedx.cz/posts/sharing-containers-from-private-registry-in-azure/> [retrieved on 20240513]
- FANI DIMU: "Automatic security hardening of Docker containers using Mandatory Access Control, specialized in defending isolation", 31 May 2019 (2019-05-31), Dspace, pages 1 - 174, XP093161799, Retrieved from the Internet <URL:https://dspace.lib.ntua.gr/xmlui/bitstream/handle/123456789/49202/Thesis_FDimou.pdf?sequence=1> [retrieved on 20240513], DOI: http://dx.doi.org/10.26240/heal.ntua.16814

## Description

### TECHNICAL FIELD

The present disclosure relates generally to the field of protection profiles. More particularly, it relates to generating protection profiles for container environments.

### BACKGROUND

A container, i.e., a container environment, is a light-weight operating system level virtualization technology.

In opposition to virtual machines, VM, containers do not embed their own kernel but run directly on a host kernel enabling the container to be light-weight.

A first drawback of containers is that since the containers run directly on the host kernel they are not as secure as VMs.

A second drawback of containers is that the light-weightness of the containers, i.e., lack of isolation layers between the container and the host kernel, make them more vulnerable to kernel exploits and attacks on the shared host resources.

Therefore, there is a need for approaches for generating protection profiles for container environments.

By way of example, US 2017/116412 A1 relates to cybersecurity systems, and more particularly to profiling software containers and detecting malicious activity by software containers based on their respective profiles. Moreover, Martin Simecek in "Sharing containers from private registry in Azure", 16 July 2019 (2019-07-16), pages 1-8 teaches how to share containers through Microsoft Azure and Fani Dimu in "Automatic security hardening of Docker containers using Mandatory Access Control, specialized in defending isolation", 31 May 2019 (2019-05-31), pages 1-174 discloses design and implementation of a software which will provide automatic security hardening of docker containers using Mandatory Access Control.

### SUMMARY

It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an apparatus is referred to herein, it is to be understood as a physical product. The physical product may comprise one or more parts, such as controlling circuitry in the form of one or more controllers, one or more processors, or the like.

It is an object of some embodiments to solve or mitigate, alleviate, or eliminate at least some of the above or other drawbacks.

According to a first aspect, this is achieved by a method for generating a protection profile for one or more container environments to be deployed in an execution environment using one or more deployment resources, wherein the protection profile defines access rules for the one or more container environments.

The method comprises receiving a request for one or more services to be deployed in one or more container environments over a secure connection from a requestor, wherein the request for the one or more services comprises a first configuration information of the one or more container environments, and launching an execution environment for the one or more container environments to be deployed in based on the first configuration information,.

The method further comprises creating credentials and a link using the one or more deployment resources for securely accessing the launched execution environment, providing the created credentials and link to the requestor, and receiving, in the launched execution environment, the one or more services and a second configuration information.

The method furthermore comprises launching, in the launched execution environment, the one or more container environments with the received one or more services based on the second configuration information, launching, in the launched execution environment, a profile generating engine for generating a protection profile for the one or more container environments, and generating, using the launched profile generating engine, the protection profile dynamically for the one or more container environments.

In some embodiments, generating the protection profile dynamically for the one or more container environments comprises verifying functionality of the one or more services during a tracing period.

In some embodiments, verifying functionality of the one or more services comprises collecting information as basis to generate access rules for the one or more container environments.

In some embodiments, the method further comprises temporarily storing the generated protection profile and deleting the launched execution environment in response to generating the protection profile.

In some embodiments, the method further comprises providing the generated protection profile to the requestor in response to generating the protection profile.

In some embodiments, the method further comprises applying, using the one or more deployment resources, the provided protection profile for the one or more container environments when the one or more services are being deployed in the one or more container environments either locally or remotely in a cloud environment.

In some embodiments, the execution environment comprises one or more virtual machines, VM.

In some embodiments, the execution environment comprises a Docker environment.

In some embodiments, the access rules defined in the protection profile comprise Mandatory Access Control, MAC, for the one or more container environments, wherein the MAC causes a kernel security module of an operating system to constrain access from the one or more container environments to objects of the operating system.

A second aspect is a computer program product comprising a non-transitory computer readable medium, having thereon a computer program comprising program instructions. The computer program is loadable into a data processing unit and configured to cause execution of the method according to the first aspect when the computer program is run by the data processing unit.

A third aspect is an apparatus for generating a protection profile for one or more container environments to be deployed in an execution environment using one or more deployment resources, wherein the protection profile define access rules for the one or more container environments.

The apparatus comprises controlling circuitry being configured to cause reception of a request for one or more services to be deployed in one or more container environments over a secure connection from a requestor, wherein the request for the one or more services comprises a first configuration information of the one or more container environments, and launch of an execution environment for the one or more container environments to be deployed in based on the first configuration information.

The controlling circuitry being further configured to cause creation of credentials and a link using the one or more deployment resources for securely accessing the launched execution environment, provision of the created credentials and link to the requestor, and reception, in the launched execution environment, of the one or more services and a second configuration information.

The controlling circuitry being furthermore configured to cause launch, in the launched execution environment, of the one or more container environments with the received one or more services based on the second configuration information, launch, in the launched execution environment, of a profile generating engine for generating a protection profile for the one or more container environments, and generation, using the launched profile generating engine, of the protection profile dynamically for the one or more container environments.

In some embodiments, the controlling circuitry is further configured to cause temporary storage of the generated protection profile and deletion of the launched execution environment in response to the generation of the protection profile.

In some embodiments, the controlling circuitry is further configured to cause provision of the generated protection profile to the requestor in response to the generation of the protection profile.

In some embodiments, the controlling circuitry is further configured to cause, using the one or more deployment resources, application of the provisioned protection profile for the one or more container environments when the one or more services are being deployed in the one or more container environments either locally or remotely in the cloud environment.

A fourth aspect is a server comprising the apparatus according to the third aspect.

A fifth aspect is a cloud environment comprising the apparatus according to the third aspect and/or the server according to the fourth aspect.

Any of the above aspects may additionally have features identical with or corresponding to any of the various features as explained above for any of the other aspects.

An advantage of some embodiments is that approaches for generating protection profile for container environments are provided.

Yet an advantage of some embodiments is that an overall security of containers is improved as the generated protection profile defines access rules for the one or more container environments.

Yet an advantage of some embodiments is that the lack of isolation layers between the container and the host kernel is overcome by the generated protection profile which makes the container less vulnerable to kernel exploits and attacks on the shared host resources.

Yet an advantage of some embodiments is that the protection profile is generated dynamically, i.e., automatically, and therefore easy to keep up to date and less cumbersome for an administrator to use.

Yet an advantage of some embodiments is that the dynamically generated protection profile automatically generates a set of rules to confine excessive privileges of the containers.

Yet an advantage of some embodiments is that the dynamically generated protection profile automatically extends defense functionality of the containers to defend against attacks.

Yet an advantage of some embodiments is that the protection profile is generated dynamically by a remote service, i.e., a security service, alleviating the administrator of the task of generating a protection profile without the need to make local profile generation installations or being too restrictive by preventing a service running in the container environment to execute correctly, or without being too generous by opening up for attacks on the container.

It should be noted that, even if embodiments are described herein in the context of generating protection profiles for container environments, some embodiments may be equally applicable and/or beneficial also in other contexts.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1a is a flowchart illustrating example method steps according to some embodiments;
Figure 1b is a sequence diagram illustrating example sequence steps according to some embodiments;
Figure 2 is a schematic drawing illustrating an example system according to some embodiments;
Figure 3a is a schematic drawing illustrating an example mechanism according to some embodiments;
Figure 3b is a schematic drawing illustrating example modes according to some embodiments;
Figure 4 is a schematic block diagram illustrating an example apparatus according to some embodiments; and
Figure 5 is a schematic drawing illustrating an example computer readable medium according to some embodiments.

### DETAILED DESCRIPTION

As already mentioned above, it should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

In the following, embodiments will be presented where approaches for generating protection profiles for container environments are described.

The approaches for generating protection profiles for container environments comprise any one of a method generating a protection profile for one or more container environment to be deployed in an execution environment using one or more deployment resources, an apparatus generating a protection profile for one or more container environment to be deployed in an execution environment using one or more deployment resources, a server comprising the apparatus, and a cloud environment comprising the apparatus and/or the server.

Alternatively or additionally, the approaches comprise a remote service for container application access restriction collection, protection profile generation, and provision of protection profiles.

As mentioned above, the container, i.e., the container environment, is a light-weight operating system level virtualization technology.

In opposition to virtual machines, VM, containers do not embed their own kernel but run directly on a host kernel enabling the container to be light-weight.

VMs implement a layer called hypervisor to add an isolation between applications and host while containers implement a high-level interface between guest and host, which hides complexity to the user at the cost of becoming more complex itself.

It should be noted that, even if embodiments are described herein in the context of generating protection profiles for container environments, some embodiments may be equally applicable and/or beneficial also in other contexts wherein protection profiles are generated.

It should further be noted that, even if embodiments are described herein in the context of generating protection profiles for container environments in a remote service, some embodiments may be equally applicable and/or beneficial also in other contexts wherein protection profiles are generated in other types of services.

It should furthermore be noted that, even if embodiments are described herein in the context of generating protection profiles for container environments in a remote service using cloud resources, some embodiments may be equally applicable and/or beneficial also in other contexts wherein other deployment resources are used.

A service, as described herein, may typically comprise, processes and/or threads configured to be run in one or more container environments.

Container environments, as described herein, may typically comprise stateless software components that may virtually package and isolate services, e.g., distributed applications, for deployment in an execution environment. Further, container environments may share access to an operating system, OS, kernel of one or more deployment resources via the execution environment in which the one or more container environments are deployed in.

Execution environments, as described herein, may typically comprise an environment wherein one or more container environments may be deployed, e.g. hosted, wherein the execution environment provides a layer of abstraction to one or more deployment resources.

Virtual Machines, as described herein, may comprise a hypervisor configured to provide a layer of abstraction, e.g., configured to emulate hardware from pooled Central Processing Units, memory, storage and network resources of one or more deployment resources.

A requestor, as described herein, may typically comprise an administrator of containers and/or services.

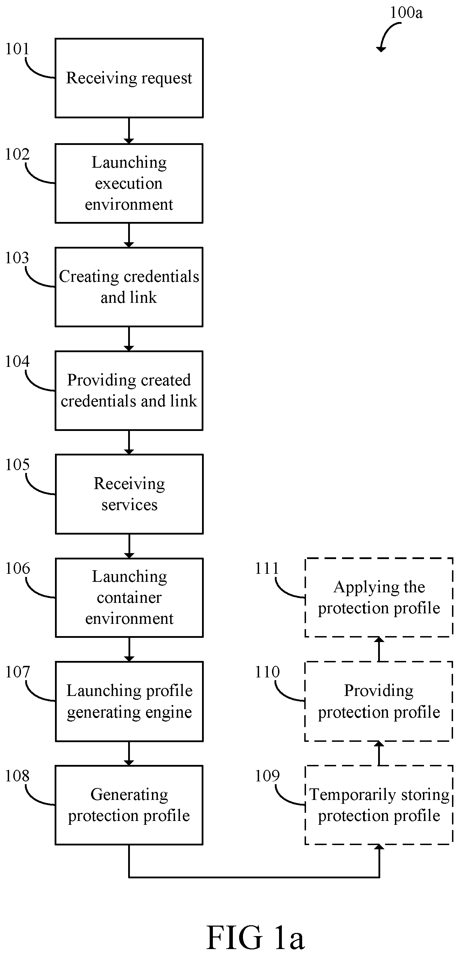

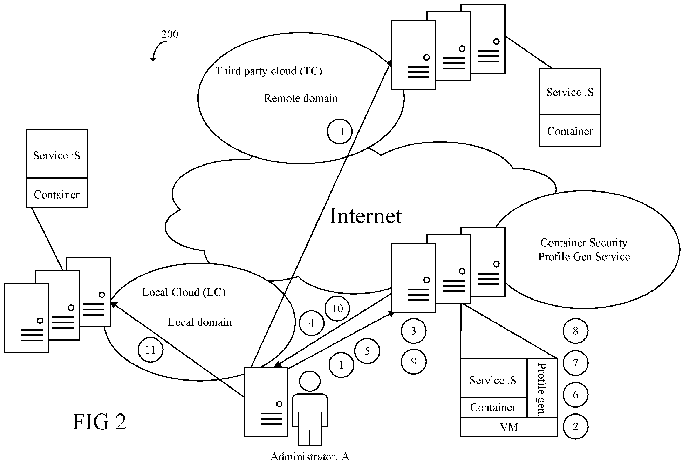

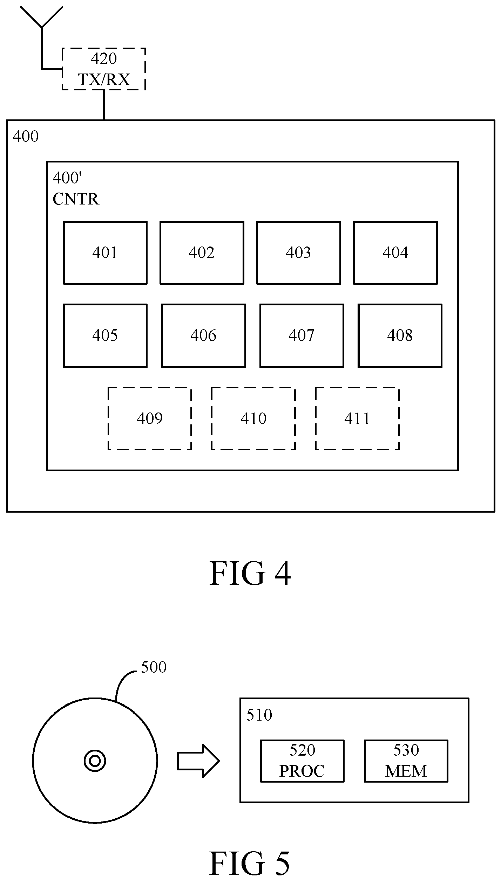

Figure 1a is a flowchart illustrating method steps of an example method 100a according to some embodiments. The method 100a is for generating a protection profile for one or more container environments to be deployed in an execution environment using one or more deployment resources. Thus, the method 100a (or steps thereof) may, for example, be performed by the apparatus 400 and/or the controller 410' of Figure 4 in the system 200 of Figure 2; all of which will be described later herein.

The method 100a comprises the following steps.

In step 101, a request is received for one or more services to be deployed in one or more container environments over a secure connection from a requestor, wherein the request for the one or more services comprises a first configuration information of the one or more container environments.

For example, the received request may have been prepared by an administrator machine.

For example, the one or more services to be deployed in the one or more container environments may comprise micro services.

In some embodiments, the secure connection may comprise an authenticated, confidentiality, and integrity protected connection for communication.

For example, the secure connection may be based on an agreement between the administrator machine and a container security provider.

In step 102, an execution environment is launched for the one or more container environments to be deployed in based on the first configuration information.

In some embodiments, the execution environment comprises one or more virtual machines, VM.

In some embodiments, the first configuration information of the one or more container environments may comprise configuration information of the one or more container environments and/or the services to be deployed in the one or more container environments.

For example, the first configuration information may comprise information for the one or more container environments to run as one or more services, e.g., as micro services.

In step 103, credentials and a link are created using the one or more deployment resources for securely accessing the launched execution environment.

For example, the credentials may comprise login credentials.

For example, the credentials may comprise a temporary key, or an access token, or any other credential for securely accessing the launched execution environment.

For example, the link may comprise an Uniform Resource Locator, URL.

For example, the one or more deployment resources may comprise one or more cloud resources which may be used to create login credentials and URL to the launched execution environment.

In step 104, the created credentials and link are provided to the requestor.

Alternatively or additionally, the created credentials are provided to the requestor over a secure connection.

In some embodiments, the secure connection comprises an authenticated, confidentiality, and integrity protected connection for communication.

In step 105, the one or more services and a second configuration information are received in the launched execution environment.

In step 106, the one or more container environments with the received one or more services are launched based on the second configuration information in the launched execution environment.

In some embodiments, the second configuration information of the one or more container environments may comprise further configuration information of the one or more container environments and/or the one or more services to be deployed in the one or more container environments.

In step 107, a profile generating engine for generating a protection profile for the one or more container environments is launched in the launched execution environment.

In step 108, the protection profile is dynamically generated for the one or more container environments using the launched profile generating engine.

Alternatively or additionally, the dynamically generated protection profile is automatically generated.

In some embodiments, the dynamically generated protection profile for the one or more container environments comprises functionality of the one or more services partly being tested through interactions with the requestor.

In some embodiments, the dynamically generated protection profile for the one or more container environments comprises functionality of the one or more services being verified during a tracing period.

In some embodiments, the verified functionality of the one or more services comprises information being collected as basis to generate access rules for the one or more container environments.

In some embodiments, the generated access rules provide the access rules to be enforced in the generated protection profile for the one or more container environments.

In optional step 109, in some embodiments, the generated protection profile is temporarily stored and the launched execution environment is deleted in response to generating the protection profile.

Additionally or alternatively, all container environment related data from the one or more cloud resources in the cloud environment is deleted.

In optional step 110, in some embodiments, the generated protection profile is provided to the requestor in response to generating the protection profile.

Additionally or alternatively, the generated protection profile is provided to the requestor in response to temporarily storing the protection profile.

In optional step 111, in some embodiments, the provided protection profile for the one or more container environments is applied, using the one or more deployment resources, when the one or more services are being deployed in the one or more container environments either locally (reference to LC in Figure 2) or remotely in a cloud environment (reference to TC in Figure 2).

In some embodiments, the access rules defined in the protection profile comprise Mandatory Access Control, MAC, for the one or more container environments, wherein the MAC causes a kernel security module of an operating system to constrain access from the one or more container environments to objects of the operating system.

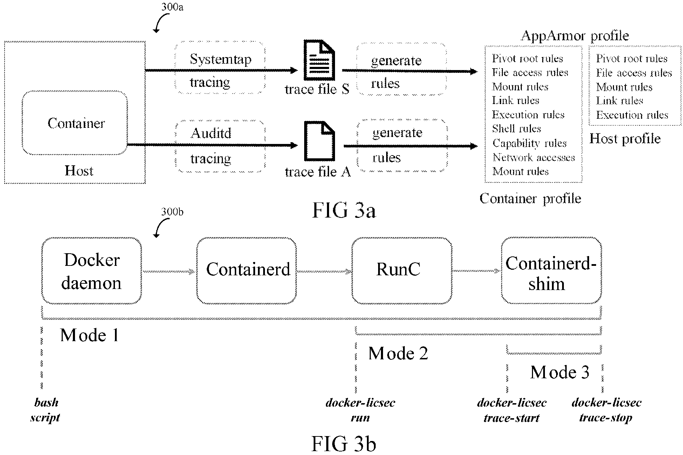

For example, the kernel security model may comprise an AppArmor ("ApplicationArmor") which is a Linux kernel security module (reference to Figure 3a).

For example, the kernel security module constrains the container's access to files, permissions, capabilities, and network accesses so that the privilege of a single container environment is confined to the least.

Alternatively or additionally, any of the above steps may be performed by a remote service for container application access restriction collection, protection profile generation, and provision of protection profiles.

In some embodiments, the remote service comprises a "Container Security Profile Gen Service" (reference to Figure 2).

Any of the above steps for Figure 1a may additionally have features identical with or corresponding to any of the various features as explained below for Figures 2-5, as suitable.

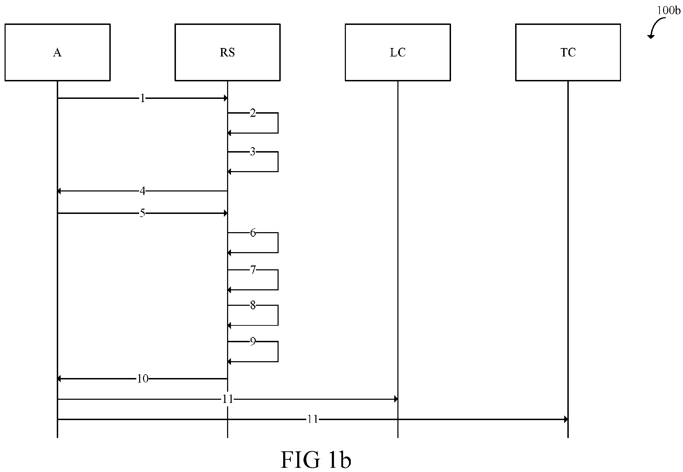

Figure 1b is a sequence diagram illustrating sequence steps of an example sequence 100b according to some embodiments. The sequence 100b is for generating a protection profile for one or more container environments to be deployed in an execution environment using one or more deployment resources. Thus, the sequence 100b (or steps thereof) may, for example, be performed by the apparatus 400 and/or the controller 410' of Figure 4 in the system 200 of Figure 2; all of which will be described later herein.

The sequence 100b comprises the following steps.

In step 1, a request is prepared by an administrator, A, and is received by a remote service, RS, for one or more services to be deployed in one or more container environments (compare with step 101 of Figure 1a).

In step 2, an execution environment is launched in the RS for the one or more container environments to be deployed in (compare with step 102 of Figure 1a).

In step 3, credentials and a link are created in the RS for securely accessing the launched execution environment (compare with step 103 of Figure 1a).

In step 4, the created credentials and link are provided from the RS to the A (compare with step 104 of Figure 1a).

In step 5, the one or more services are received in the launched execution environment in the RS (compare with step 105 of Figure 1a).

In step 6, the one or more container environments with the received one or more services are launched in the launched execution environment in the RS (compare with step 106 of Figure 1a).

In step 7, a profile generating engine for generating a protection profile for the one or more container environments is launched in the launched execution environment in the RS (compare with step 107 of Figure 1a).

In step 8, the protection profile is dynamically generated for the one or more container environments using the launched profile generating engine in the RS (compare with step 108 of Figure 1a).

In some embodiments, during the dynamic generation of the protection profile further interaction between the RS and A may take place for generating the protection profile dynamically by testing functionality of the one or more services.

In optional step 9, in some embodiments, the generated protection profile is temporarily stored and the launched execution environment is deleted in response to generating the protection profile in the RS (compare with step 109 of Figure 1a).

In optional step 10, in some embodiments, the generated protection profile is provided to the A from the RS in response to generating the protection profile in the RS (compare with step 110 of Figure 1a).

In optional step 11, in some embodiments, the provided protection profile for the one or more container environments is provided by the A to the local domain LC and/or the remote domain TC to be applied when the one or more services are being deployed in the one or more container environments either locally in the LC (reference to LC in Figure 2) or remotely in the TC in a cloud environment (reference to TC in Figure 2) (compare with step 111 of Figure 1a).

Any of the above steps for Figure 1b may additionally have features identical with or corresponding to any of the various features as explained below for Figures 2-5, as suitable.

Figure 2 is a schematic drawing illustrating components of an example system 200 according to some embodiments. The system 200 is for generating a protection profile for one or more container environments to be deployed in an execution environment using one or more deployment resources. Thus, the system 200 (or components thereof) may, for example, perform the method steps of Figure 1a and/or the sequence steps of Figure 1b, and/or comprise the apparatus 400 and/or the controller 410' of Figure 4; of which will be described later herein.

The system 200 illustrates protection profile generation in a remote service, "Container Security Profile Gen Service", wherein the remote service is security service for administrators of containers and/or services.

The protection profile generation may gradually be enhanced to provide better performance and protection as it off-loads the administrator of a container service task of setting up a protection profile generation environment.

In one embodiments, the protection profile generation comprises a Mandatory Access Control (MAC) protection profile generation.

In one embodiment, the protection profile generation is performed in a Docker Linux environment allowing generation of strict access rules with a high level of protection.

In one embodiment, the container environment comprises a Linux container.

The Docker Linux Environment may implement several Linux kernel security mechanisms such as Capabilities, Seccomp etc., and enable MAC rule and policy enforcement layers such as SELinux or AppArmor.

The system 200 comprises an administrator, A, intending to launch an arbitrary service, S, on a container. The service can be launched on a local container infrastructure LC or on a third party cloud infrastructure TC utilized by the administrator.

The administrator A prepares the service S and configures it to run on a suitable container platform, e.g., LC and/or TC.

In order to alleviate the administrator A of manually configuring a protection profile, e.g., MAC configuration for the container environment of which security configurations are cumbersome and hard to set, and of which it is difficult to obtain the right protection scope for in terms of MAC rules, i.e., either they are too restrictive preventing the service running (i.e., being deployed) in the container environment to work properly, or they are too generous, opening up for attacks on the container environment, the protection profile is generated automatically and dynamically in the remote security service "Container Security Profile Gen Service".

The remote security service enables generation of a protection profile which is easy to keep "up to date" as the protection profile generation is provided automatically and dynamically as a remote service for the administrator A while providing a high level of protection.

In the following, steps 1-11 illustrated in the system 200 (corresponding to method steps 101-111 of Figure 1a and/or sequence steps 1-11 of Figure 1b) are described in connection with the components of the system 200.

In step 1, a request is prepared by an administrator, A, and is received by a remote service for one or more services to be deployed in one or more container environments.

For example, the administrator prepares a new service, S, together with configuration information, C, including parameters such as the mounted volumes, the open ports, the needed capabilities, etc. S will be deployed on a container on a local or third party cloud resources as a new service with the given configurations.

In step 2, an execution environment is launched in the remote service for the one or more container environments to be deployed in.

Alternatively or additionally, the administrator is assumed to have an agreement with a container security provider and sets up a secure connection (which is authenticated, confidentiality and integrity protected) with these container security providers. The container security provider evaluates if the requester, i.e., the administrator, has an agreement with the container security provider.

For example, if there is an agreement in place with the container security, the container security provider launches a new Virtual Machine including container launch profile and MAC profile generator on an internal cloud resource.

In step 3, credentials and a link are created in the remote service for securely accessing the launched execution environment.

For example, login credentials for the VM running container services is created on the internal resources and a URL as well as credentials for accessing the VM is returned to the administrator, e.g., an administrator machine.

In step 4, the created credentials and link are provided from the remote service to the administrator.

For example, the administrator uses the credentials received to make a secure connection to the new VM created in the "Container Security Profile Gen Service and using the received credentials, the administrator logs in to the VM and uploads the service, S, and configuration information, C, to the VM.

In step 5, the one or more services are received in the launched execution environment in the remote service.

In step 6, the one or more container environments with the received one or more services are launched in the launched execution environment in the remote service.

For example, a script on the VM launches a container with the uploaded service on the VM.

In step 7, a profile generating engine for generating a protection profile for the one or more container environments is launched in the launched execution environment in the remote service.

In step 8, the protection profile is dynamically generated for the one or more container environments using the launched profile generating engine in the remote service.

For example, the profile generating engine generates a MAC protection profile, P.

For example, the administrator verifies the functionality of S during the tracing period (reference to Figure 3a and Figure 3b).

In optional step 9, in some embodiments, the generated protection profile is temporarily stored and the launched execution environment is deleted in response to generating the protection profile in the remote service.

For example, the generated protection profile is temporarily stored and the VM is killed and all its data is wiped out from memory.

In optional step 10, in some embodiments, the generated protection profile is provided to the administrator from the remote service in response to generating the protection profile in the remote service.

The protection profile P may be returned in a number of ways to the administrator A, for example:
- by sending a protection profile download link to A,
- by sending a notification to an Application programming Interface, API, on a machine running in the local domain LC, which triggers a protection profile download,
- by direct message transfer to A with the protection profile P.

In optional step 11, in some embodiments, the provided protection profile for the one or more container environments is provided by the administrator to the local domain LC and/or the remote domain TC to be applied when the one or more services are being deployed in the one or more container environments either locally in the LC or remotely in the TC in a cloud environment.

Figure 3a is a schematic drawing illustrating steps of a rules generating mechanism 300a according to some embodiments. The rules generating mechanism 300a is for generating a protection profile for one or more container environments to be deployed in an execution environment using one or more deployment resources. Thus, the generating mechanism 300a (or steps thereof) may, for example, be performed by the apparatus 400 and/or the controller 410' of Figure 4 in the system 200 of Figure 2.

The rules generating mechanism 300a, which may be an AppArmor profile generator, extends existing functionality of Docker-sec and LiCShield.

The extension of functionality comprise following:
1) automatically generating more rules (like mount, file access rules etc.) to confine more privileges other than capabilities and network accesses offered by Docker-sec.
2) extending Docker-sec's functionality to defend against more attacks based on their attacking principles, i.e., forbidding unnecessary spawned shells to defend privilege escalation attacks, confine the access mode of crucial files such as '/etc/passwd'.

The rules generating mechanism 300a uses the principles in LicShield and combines it with the Docker-sec rules generation engine.

In this combination (LicShield and Docker-sec), the rules generating mechanism 300a, forms a single function which is a more powerful protection profile generator.

The AppArmor profile is following the Docker-sec enforcement principles and enhancing the Docker-sec profile generator (Adapting LicShield for Docker-sec usage and extending it).

The following modifications are performed on LiCShield and Docker-sec:
1) LiCShield's approach of enforcing container profile is modified in order to enforce per-container profile with more rules. How AppArmor profiles are enforced have been changed. Instead of using the LicShield approach where a profile is enforced with a pivot root rule on the host, the LicShield profile generator is used but applied using the Docker sec enforcement principle.
2) LiCShield's SystemTap script is modified in order to trace all processes triggered by different Docker components by:
   a. adding one more fields to the trace log structure called "executable process name" in order to identify processes with empty executable path such as "runc:[2:INIT]";
   b. enabling the trace for processes also for processes which are not in the target tree.
3) LiCShield's rules generator is modified by:
   a. generating deny rules for prompting shells inside container in order to defend privilege escalation attacks. If no command such as '/bin/bash','/bin/sh' and '/bin/dash' is tracked during the tracing period, operations of 'r' (read), 'w' (write), 'm' (memory map as executable), 'k' (file locking), 'I' (creation hard links) and 'x' (execute) to those commands are all denied by adding the deny rules to the container profile;
   b. the way of classifying generated rules to container profiles and host profiles are changed in order to identify profiles more accurately.
4) Docker-sec's training process and rules generator are modified in order to automate the generation of mount rules by:
   a. adding auditing for mount operations when training process starts in addition to the Docker-sec network and capabilities;
   b. adding a function for generating mount rules based on the Auditd log.

The rules generating mechanism 300a comprises mechanisms such as trace and profile generation, as illustrated in Figure 3a.

Tracing comprises a procedure of the protection profile generator 300a to collect necessary information as the basis to generate rules.

For example, SystemTap and Auditd are leveraged as the tracing tools.

When the tracing starts, SystemTap and Auditd work in parallel: the former one collects kernel operations performed by all the Docker components based on a pre-defined trace script and the latter one collects mount operations, capability operations and network operations performed by the running container. The structure of SystemTap trace can be customized and flexible while the structure of Auditd trace is defined by Auditd and fixed.

The structure for SystemTap trace based on LiCShield is as follows.

One or more fields are added called executable process name (marked with a star below) in addition to LiCShield. The new structure has the following fields: <probe point name> <control group path> <executable process name> <executable path> <resources path> <mount namespace root>.
- probe point name: the name of the kernel function probed, which identifies the required privileged operation. For example, when 'security sb pivotroot' function is probed, the pivot root privilege is required. The new profile generator identifies the type of the rule depending on this field.
- control group path: identifies the source of the request, either from the container or from the host. This is used for distinguishing the operations between inside the container and the host and classify the generated rules to container profile and host profile.
- *executable process name: newly added field by the protection profile generator. The name of the process which performs the operation. This field is introduced by the protection profile generator in order to help us to identify some processes which have empty executable paths such as "RunC:INIT"
- executable path: the executable path of the process which performs the operation, acting as the subject of the privilege operation.
- resources path: the resource involved in the operation, acting as the object of the privilege operation.
- mount namespace root: identifies the involved resource's mount point, which could also be used for identifying where the request comes from. Since if the operation is performed inside the container, the mount point locates in the Overlay2 file system.

Figure 3b is a schematic drawing illustrating modes of a generating mechanism 300b according to some embodiments. The generating mechanism 300b is for generating a protection profile for one or more container environments to be deployed in an execution environment using one or more deployment resources. Thus, the generating mechanism 300a (or modes thereof) may, for example, be achieved by the apparatus 400 and/or the controller 410' of Figure 4 in the system 200 of Figure 2.

As mentioned above, the protection profiles are generated automatically through analyzing the trace files. The rules generating mechanism 300a (illustrated and described in Figure 3a) obtains the key fields from the traces and combines them based on different syntax of different rules.

The algorithm for translating the SystemTap trace to rules is shown below as *Algorithm 1* implemented as a Python script based on a LiCShield's implementation.

The differences compared to a prior art LicShield implementation comprise at least following:
First, raw data of the trace file is collected line by line. For each line, the applied rule is determined (e.g., pivot root rule, link rule, file access rule, mount rule or execution rule) according to the field "probe point name".
Second, the rules are classified into different profiles according to the fields "control group path", "executable process name" and "executable path".
Third, the fields "executable process name", "executable path", "resource path" and "mount namespace root" are input to the engine to generate rules.

Further, the rules generating mechanism 300a introduces a new function that when generating the execution rules for the container, it checks if the execution is for prompting shells. If no such executions are traced, it adds the deny rules for all shell commands in the container profile.

Fourth, the container rules are written into the AppArmor profile which has been enforced upon container's launch instead of a newly created profile, which realizes the real-time enforcement of container protection.

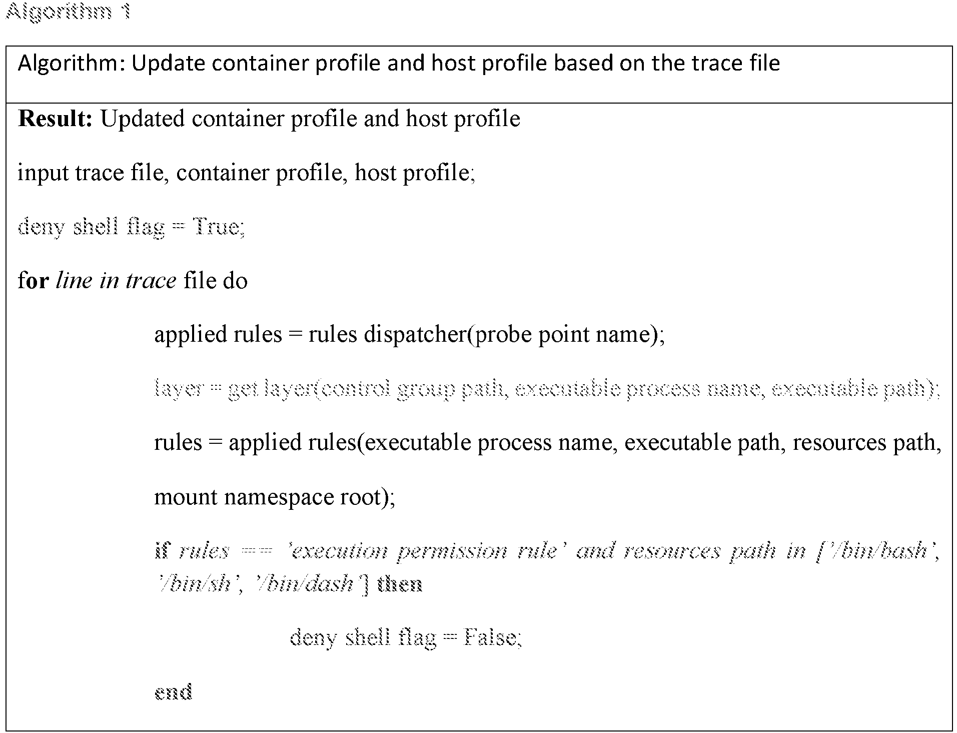

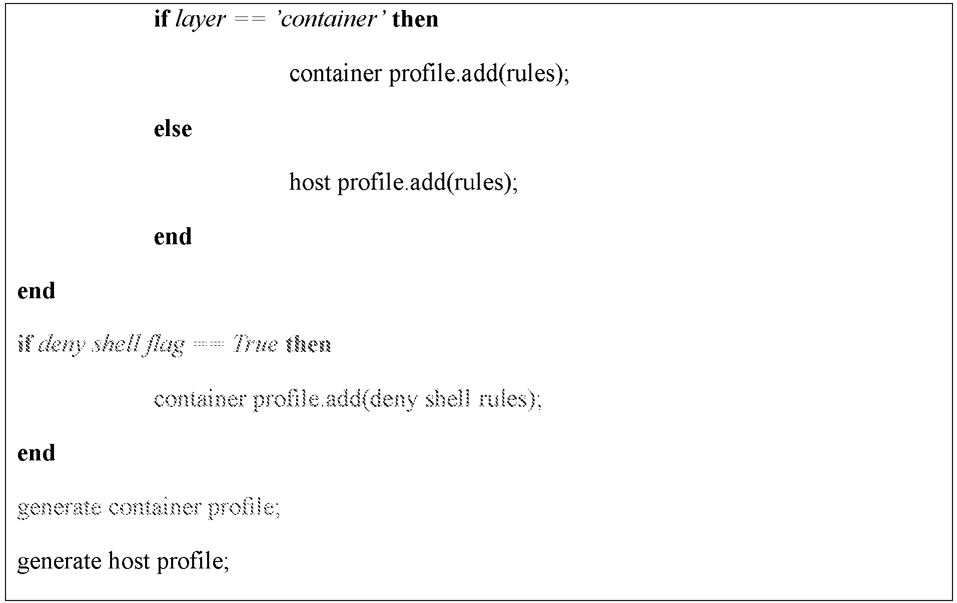

The translation from Auditd trace to capability rules, network access rules and mount rules are done by a bash script in mode 1. For the capability rules and network access rules, a Docker-sec's approach is directly followed. Based on Auditd trace structures, described above, first, we sort out capability traces generated by the running container by searching traces with "profile=<profile_name>", "apparmor=AUDIT" and "operation=capable". Here, the profile name is a known name of the enforced AppArmor profile for the container. Second, we get the capability used inside container from the field 'capname' of these traces. We add them to container profile as the capability rules using the following syntax:
capability <capname>

In a similar way, to generate the network accesses rules. First, traces are searched out with "profile=<profile_name>" and "apparmor=AUDIT", including the fields: "family", "sock type" and "protocol". Second, the values in these three fields are combined to generate the network access rules using the following syntax:
network <family> <sock type> <protocol>

To generate the mount rules: First, the mount operation performed by the container through searching traces is obtained with "profile=<profile_name>", "apparmor=AUDIT" and "operation=mount". Second, the values in these key fields "fstype", "srcname", "name" and "flags" are obtained from those traces and combined to a mount rule using the following syntax:
mount fstype=<fstype> options=<flags> <srcname> -> <name>

Figure 4 is a schematic block diagram illustrating an example apparatus 400 according to some embodiments. The apparatus 400 is for generating a protection profile for one or more container environments to be deployed in an execution environment using one or more deployment resources. Thus, the apparatus 400 and/or the controller 410' may, for example, be configured to perform one or more of the steps of Figure 1a, and/or Figure 1b, and/or one or more of any steps otherwise described herein, in the system 200 of Figure 2.

The apparatus 400 is for generating a protection profile for one or more container environments to be deployed in an execution environment using one or more deployment resources, wherein the protection profile define access rules for the one or more container environments.

The apparatus 400 comprises a controller 410', e.g. device controlling circuitry, configured to cause reception of a request for one or more services to be deployed in one or more container environments over a secure connection from a requestor, wherein the request for the one or more services comprises a first configuration information of the one or more container environments, and launch of an execution environment for the one or more container environments to be deployed in based on the first configuration information.

The controller 410' is further configured to cause creation of credentials and a link using the one or more deployment resources for securely accessing the launched execution environment, provision of the created credentials and link to the requestor, and reception, in the launched execution environment, of the one or more services and a second configuration information.

The controller 410' is furthermore configured to cause launch, in the launched execution environment, of the one or more container environments with the received one or more services based on the second configuration information, launch, in the launched execution environment, of a profile generating engine for generating a protection profile for the one or more container environments, and generation, using the launched profile generating engine, of the protection profile dynamically for the one or more container environments.

The apparatus 400 comprises, as mentioned above, the controller (CNTR; e.g., control circuitry or a controlling module) 410, which may in turn comprise, (or be otherwise associated with; e.g., connected or connectable to), a receiver 401, e.g. receiving circuitry or receiving module, configured to receive a request for one or more services to be deployed in one or more container environments over a secure connection from a requestor, wherein the request for the one or more services comprises a first configuration information of the one or more container environments (compare with step 101 of Figure 1a and/or step 1 of Figure 1b and/or step 1 of Figure 2).

The controller 410' further comprises, (or is otherwise associated with; e.g., connected or connectable to), a launcher 402, e.g. launching circuitry or launching module, configured to launch an execution environment for the one or more container environments to be deployed in based on the first configuration information (compare with step 102 of Figure 1a and/or step 2 of Figure 1b and/or step 2 of Figure 2).

The controller 410' further comprises, (or is otherwise associated with; e.g., connected or connectable to), a creator 403, e.g. creating circuitry or creating module, configured to create credentials and a link using the one or more deployment resources for securely accessing the launched execution environment (compare with step 103 of Figure 1a and/or step 3 of Figure 1b and/or step 3 of Figure 2).

The controller 410' further comprises, (or is otherwise associated with; e.g., connected or connectable to), a provider 404, e.g. providing circuitry or providing module, configured to provide the created credentials and link to the requestor (compare with step 104 of Figure 1a and/or step 4 of Figure 1b and/or step 4 of Figure 2).

The controller 410' further comprises, (or is otherwise associated with; e.g., connected or connectable to), a receiver 405, e.g. receiving circuitry or receiving module, configured to receive, in the launched execution environment, the one or more services and a second configuration information (compare with step 105 of Figure 1a and/or step 5 of Figure 1b and/or step 5 of Figure 2).

The controller 410' further comprises, (or is otherwise associated with; e.g., connected or connectable to), a launcher 406, e.g. launching circuitry or launching module, configured to launch, in the launched execution environment, the one or more container environments with the received one or more services based on the second configuration information (compare with step 106 of Figure 1a and/or step 6 of Figure 1b and/or step 6 of Figure 2).

The controller 410' further comprises, (or is otherwise associated with; e.g., connected or connectable to), a launcher 407, e.g. launching circuitry or launching module, configured to launch, in the launched execution environment, a profile generating engine for generating a protection profile for the one or more container environments (compare with step 107 of Figure 1a and/or step 7 of Figure 1b and/or step 7 of Figure 2).

The controller 410' further comprises, (or is otherwise associated with; e.g., connected or connectable to), a generator 408, e.g. generating circuitry or generating module, configured to generate, using the launched profile generating engine, the protection profile dynamically for the one or more container environments (compare with step 108 of Figure 1a and/or step 8 of Figure 1b and/or step 8 of Figure 2).

In some embodiments, the dynamic generation of the protection profile for the one or more container environments comprises verification of functionality of the one or more services during a tracing period.

In some embodiments, the verification of the functionality of the one or more services comprises collection of information as basis to generate access rules for the one or more container environments.

In some embodiments, the access rules defined in the protection profile comprise Mandatory Access Control, MAC, for the one or more container environments, wherein the MAC causes a kernel security module of an operating system to constrain access from the one or more container environments to objects of the operating system.

In some embodiments, the execution environment comprises one or more virtual machines, VM.

The controller 410' further comprises, (or is otherwise associated with; e.g., connected or connectable to), a transceiver TX/RX 420, e.g. transceiving circuitry or transceiving module, configured to transmit radio signals for generating a protection profile for one or more container environments to be deployed in an execution environment using one or more deployment resources.

In some embodiments, the controller 410' further comprises, (or is otherwise associated with; e.g., connected or connectable to), a temporary storer 409, e.g. storing circuitry or storing module, configured to temporarily store the generated protection profile and delete the launched execution environment in response to the generation of the protection profile (compare with step 109 of Figure 1a and/or step 9 of Figure 1b and/or step 9 of Figure 2).

In some embodiments, the controller 410' further comprises, (or is otherwise associated with; e.g., connected or connectable to), a provider 410, e.g. providing circuitry or providing module, configured to provide the generated protection profile to the requestor in response to the generation of the protection profile (compare with step 110 of Figure 1a and/or step 10 of Figure 1b and/or step 10 of Figure 2).

In some embodiments, the controller 410' further comprises, (or is otherwise associated with; e.g., connected or connectable to), an applier 411, e.g. applying circuitry or applying module, configured to apply, using the one or more deployment resources, the provisioned protection profile for the one or more container environments when the one or more services are being deployed in the one or more container environments either locally or remotely in the cloud environment (compare with step 111 of Figure 1a and/or step 11 of Figure 1b and/or step 11 of Figure 2).

In some embodiments, the apparatus 400 and/or the controller 410' is completely or partially comprised in a server.

In some embodiments, the apparatus 400 and/or the controller 410' is completely or partially comprised in a cloud environment.

In some embodiments, the apparatus 400 and/or the controller 410' is comprised in a server which in turn is comprised in a cloud environment.

In some embodiments, the server and/or the cloud environment comprising the apparatus 400 and/or the controller 410' may comprise a remote service "Container Security Profile Gen Service" (reference to Figure 2).

Generally, when an apparatus is referred to herein, it is to be understood as a physical product. The physical product may comprise one or more parts, such as controlling circuitry in the form of one or more controllers, one or more processors, or the like.

The described embodiments and their equivalents may be realized in software or hardware or a combination thereof. The embodiments may be performed by general purpose circuitry. Examples of general purpose circuitry include digital signal processors (DSP), central processing units (CPU), Graphics Processing Units (GPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a wireless communication device.

Embodiments may appear within an electronic apparatus (such as a wireless communication device) comprising arrangements, circuitry, and/or logic according to any of the embodiments described herein. Alternatively or additionally, an electronic apparatus (such as a wireless communication device) may be configured to perform methods according to any of the embodiments described herein.

According to some embodiments, a computer program product comprises a computer readable medium such as, for example a universal serial bus (USB) memory, a plug-in card, an embedded drive or a read only memory (ROM).

Figure 5 illustrates an example computer readable medium in the form of a compact disc (CD) ROM 500. The computer readable medium has stored thereon a computer program comprising program instructions. The computer program is loadable into a data processor (PROC) 520, which may, for example, be comprised in a wireless communication device 510. When loaded into the data processor, the computer program may be stored in a memory (MEM) 530 associated with or comprised in the data processor.

In some embodiments, the computer program may, when loaded into and run by the data processing unit, cause execution of steps according to, for example, Figure 1a, Figure 1b, and/or one or more of any steps otherwise described herein.

In some embodiments, the computer program may, when loaded into and run by the data processing unit, cause execution of steps according to, for example, Figure 1a and/or Figure 1b and/or Figure 2 and/or one or more of any steps otherwise described herein.

Generally, all terms used herein are to be interpreted according to their ordinary meaning in the relevant technical field, unless a different meaning is clearly given and/or is implied from the context in which it is used.

Reference has been made herein to various embodiments. However, a person skilled in the art would recognize numerous variations to the described embodiments that would still fall within the scope of the claims.

For example, the method embodiments described herein discloses example methods through steps being performed in a certain order. However, it is recognized that these sequences of events may take place in another order without departing from the scope of the claims. Furthermore, some steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

Any feature of any of the embodiments disclosed herein may be applied to any other embodiment, wherever suitable. Likewise, any advantage of any of the embodiments may apply to any other embodiments, and vice versa.

Hence, it should be understood that the details of the described embodiments are merely examples brought forward for illustrative purposes, and that all variations that fall within the scope of the claims are intended to be embraced therein.

## Claims

1. A method for generating a protection profile for one or more container environments to be deployed in an execution environment using one or more deployment resources, wherein the protection profile defines access rules for the one or more container environments, the method comprising the steps of:
receiving (101) a request by a remote service for one or more services to be deployed in one or more container environments over a secure connection from a requestor, wherein the request for the one or more services comprises a first configuration information of the one or more container environments,
launching (102), in the remote service, an execution environment for the one or more container environments to be deployed in based on the first configuration information,
creating (103) in the remote service credentials and a link using the one or more deployment resources for securely accessing the launched execution environment,
providing (104) from the remote service the created credentials and link to the requestor,
receiving (105), in the launched execution environment in the remote service, the one or more services and a second configuration information,
launching (106), in the launched execution environment in the remote service, the one or more container environments with the received one or more services based on the second configuration information,
launching (107), in the launched execution environment in the remote service, a profile generating engine for generating a protection profile for the one or more container environments,
generating (108), using the launched profile generating engine in the remote service, the protection profile dynamically for the one or more container environments, and
providing (110) the generated protection profile to the requester in response to generating the protection profile.

2. The method according to claim 1, wherein generating the protection profile dynamically for the one or more container environments comprises verifying functionality of the one or more services during a tracing period.

3. The method according to claim 2, wherein verifying functionality of the one or more services comprises collecting information as basis to generate access rules for the one or more container environments.

4. The method according to any of claims 1-3, further comprising temporarily storing (109) the generated protection profile and deleting the launched execution environment in response to generating the protection profile.

5. The method according to any of claims 1-4, further comprising applying (111), using the one or more deployment resources, the provided protection profile for the one or more container environments when the one or more services are being deployed in the one or more container environments either locally or remotely in a cloud environment.

6. The method according to any of claims 1-5, wherein the execution environment comprises one or more virtual machines, VM.

7. The method according to any of claims 1-6, wherein the access rules defined in the protection profile comprise Mandatory Access Control, MAC, for the one or more container environments, wherein the MAC causes a kernel security module of an operating system to constrain access from the one or more container environments to objects of the operating system.

8. A computer program product comprising a non-transitory computer readable medium, having thereon a computer program comprising program instructions, the computer program being loadable into a data processing unit and configured to cause execution of the method according to any of claims 1 through 7 when the computer program is run by the data processing unit.

9. An apparatus for generating a protection profile for one or more container environments to be deployed in an execution environment in a remote service using one or more deployment resources, wherein the protection profile defines access rules for the one or more container environments, the apparatus comprising controlling circuitry configured to cause:
reception of a request for one or more services to be deployed in one or more container environments over a secure connection from a requestor, wherein the request for the one or more services comprises a first configuration information of the one or more container environments,
launch of an execution environment for the one or more container environments to be deployed in based on the first configuration information,
creation of credentials and a link using the one or more deployment resources for securely accessing the launched execution environment,
provision of the created credentials and link to the requestor,
reception, in the launched execution environment, of the one or more services and a second configuration information,
launch, in the launched execution environment, of the one or more container environments with the received one or more services based on the second configuration information,
launch, in the launched execution environment, of a profile generating engine for generating a protection profile for the one or more container environments,
generation, using the launched profile generating engine, of the protection profile dynamically for the one or more container environments, and
provision of the generated protection profile to the requestor in response to the generation of the protection profile.

10. The apparatus according to claim 9, wherein the controlling circuitry is further configured to cause temporary storage of the generated protection profile and deletion of the launched execution environment in response to the generation of the protection profile.

11. The apparatus according to claim 9 or 10, wherein the controlling circuitry is further configured to cause, using the one or more deployment resources, application of the provisioned protection profile for the one or more container environments when the one or more services are being deployed in the one or more container environments either locally or remotely in the cloud environment.

12. A server comprising the apparatus according to any of claims 9-11.

13. A cloud environment comprising the apparatus according to any of claims 9-11 and/or the server according to claim 12.

## Patentansprüche

1. Verfahren zum Erzeugen eines Schutzprofils für eine oder mehrere Behälterumgebungen, das in einer Ausführungsumgebung unter Verwendung einer oder mehrere Einsatzressourcen einzusetzen ist, wobei das Schutzprofil Zugriffsregeln für die eine oder mehreren Behälterumgebungen definiert, wobei das Verfahren die folgenden Schritte umfasst:
Empfangen (101) einer Anforderung eines oder mehrerer Dienste, die in einer oder mehreren Behälterumgebungen einzusetzen sind, durch einen entfernten Dienst über eine sichere Verbindung von einem Anforderer, wobei die Anforderung des einen oder der mehreren Dienste erste Konfigurationsinformationen der einen oder mehreren Behälterumgebungen umfasst,
Starten (102), in dem entfernten Dienst, einer Ausführungsumgebung für die eine oder mehreren Behälterumgebungen, die einzusetzen sind, auf Grundlage der ersten Konfigurationsinformationen,
Erstellen (103), in dem entfernten Dienst, von Anmeldeinformationen und eines Links unter Verwendung der einen oder mehreren Einsatzressourcen zum sicheren Zugreifen auf die gestartete Ausführungsumgebung,
Bereitstellen (104) der erstellten Anmeldeinformationen und des erstellten Links von dem entfernten Dienst an dem Anforderer,
Empfangen (105) des einen oder der mehreren Dienste und von zweiten Konfigurationsinformationen in der gestarteten Ausführungsumgebung in dem entfernten Dienst,
Starten (106), in der gestarteten Ausführungsumgebung in dem entfernten Dienst, der einen oder mehreren Behälterumgebungen mit dem empfangenen einen oder den empfangenen mehreren Diensten auf Grundlage der zweiten Konfigurationsinformationen,
Starten (107), in der gestarteten Ausführungsumgebung in dem entfernten Dienst, einer Profilerzeugungsengine zum Erzeugen eines Schutzprofils für die eine oder mehreren Behälterumgebungen,
dynamisches Erzeugen (108) des Schutzprofils für die eine oder mehreren Behälterumgebungen unter Verwendung der gestarteten Profilerzeugungsengine in dem entfernten Dienst und
Bereitstellen (110) des erzeugten Schutzprofils an dem Anforderer als Reaktion auf das Erzeugen des Schutzprofils.

2. Verfahren nach Anspruch 1, wobei das dynamische Erzeugen des Schutzprofils für die eine oder mehreren Behälterumgebungen Verifizieren einer Funktionalität des einen oder der mehreren Dienste während eines Verfolgungszeitraums umfasst.

3. Verfahren nach Anspruch 2, wobei das Verifizieren einer Funktionalität des einen oder der mehreren Dienste Sammeln von Informationen als Grundlage zum Erzeugen von Zugriffsregeln für die eine oder mehreren Behälterumgebungen umfasst.

4. Verfahren nach einem der Ansprüche 1-3, ferner umfassend temporäres Speichern (109) des erzeugten Schutzprofils und Löschen der gestarteten Ausführungsumgebung als Reaktion auf das Erzeugen des Schutzprofils.

5. Verfahren nach einem der Ansprüche 1-4, ferner umfassend Anwenden (111) des bereitgestellten Schutzprofils für die eine oder mehreren Behälterumgebungen unter Verwendung der einen oder mehreren Einsatzressourcen, wenn der eine oder die mehreren Dienste entweder lokal oder entfernt in einer Cloud-Umgebung in der einen oder den mehreren Behälterumgebungen eingesetzt werden.

6. Verfahren nach einem der Ansprüche 1-5, wobei die Ausführungsumgebung eine oder mehrere virtuelle Maschinen, VM, umfasst.

7. Verfahren nach einem der Ansprüche 1-6, wobei die Zugriffsregeln, die in dem Schutzprofil definiert sind, Mandatory Access Control, MAC, für die eine oder mehreren Behälterumgebungen umfassen, wobei die MAC ein Kernel-Sicherheitsmodul eines Betriebssystems dazu veranlasst, einen Zugriff von dem einen oder den mehreren Behälterumgebungen für Objekte des Betriebssystems zu beschränken.

8. Computerprogrammprodukt, umfassend ein nicht transitorisches computerlesbares Medium, das darauf ein Computerprogramm, umfassend Programmanweisungen, aufweist, wobei das Computerprogramm in eine Datenverarbeitungseinheit ladbar und dazu konfiguriert ist, die Durchführung des Verfahrens nach einem der Ansprüche 1 bis 7 zu veranlassen, wenn das Computerprogramm durch die Datenverarbeitungseinheit ausgeführt wird.

9. Einrichtung zum Erzeugen eines Schutzprofils für eine oder mehrere Behälterumgebungen, das in einer Ausführungsumgebung in einem entfernten Dienst unter Verwendung einer oder mehrere Einsatzressourcen einzusetzen ist, wobei das Schutzprofil Zugriffsregeln für die eine oder mehreren Behälterumgebungen definiert, wobei die Einrichtung eine Steuerungsschaltung umfasst, die dazu konfiguriert ist, Folgendes zu veranlassen:
einen Empfang einer Anforderung eines oder mehrerer Dienste, die in einer oder mehreren Behälterumgebungen einzusetzen sind, über eine sichere Verbindung von einem Anforderer, wobei die Anforderung des einen oder der mehreren Dienste erste Konfigurationsinformationen der einen oder mehreren Behälterumgebungen umfasst,
einen Start einer Ausführungsumgebung für die eine oder mehreren Behälterumgebungen, die einzusetzen sind, auf Grundlage der ersten Konfigurationsinformationen,
eine Erstellung von Anmeldeinformationen und eines Links unter Verwendung der einen oder mehreren Einsatzressourcen zum sicheren Zugreifen auf die gestartete Ausführungsumgebung,
eine Bereitstellung der erstellten Anmeldeinformationen und des erstellten Links an dem Anforderer,
einen Empfang des einen oder der mehreren Dienste und von zweiten Konfigurationsinformationen in der gestarteten Ausführungsumgebung,
einen Start, in der gestarteten Ausführungsumgebung, der einen oder mehreren Behälterumgebungen mit dem empfangenen einen oder den empfangenen mehreren Diensten auf Grundlage der zweiten Konfigurationsinformationen,
einen Start, in der gestarteten Ausführungsumgebung, einer Profilerzeugungsengine zum Erzeugen eines Schutzprofils für die eine oder mehreren Behälterumgebungen,
eine dynamische Erzeugung des Schutzprofils für die eine oder mehreren Behälterumgebungen unter Verwendung der gestarteten Profilerzeugungsengine und
eine Bereitstellung des erzeugten Schutzprofils an dem Anforderer als Reaktion auf die Erzeugung des Schutzprofils.

10. Einrichtung nach Anspruch 9, wobei die Steuerungsschaltung ferner dazu konfiguriert ist, eine temporäre Speicherung des erzeugten Schutzprofils und eine Löschung der gestarteten Ausführungsumgebung als Reaktion auf die Erzeugung des Schutzprofils zu veranlassen.

11. Einrichtung nach Anspruch 9 oder 10, wobei die Steuerungsschaltung ferner dazu konfiguriert ist, eine Anwendung des bereitgestellten Schutzprofils für die eine oder mehreren Behälterumgebungen unter Verwendung der einen oder mehreren Einsatzressourcen zu veranlassen, wenn der eine oder die mehreren Dienste entweder lokal oder entfernt in der Cloud-Umgebung in der einen oder den mehreren Behälterumgebungen eingesetzt werden.

12. Sever, umfassend die Einrichtung nach einem der Ansprüche 9-11.

13. Cloud-Umgebung, umfassend die Einrichtung nach einem der Ansprüche 9-11 und/oder den Server nach Anspruch 12.

## Revendications

1. Procédé de génération d'un profil de protection pour un ou plusieurs environnements de conteneur à déployer dans un environnement d'exécution utilisant une ou plusieurs ressources de déploiement, dans lequel le profil de protection définit des règles d'accès pour les un ou plusieurs environnements de conteneur, le procédé comprenant les étapes suivantes :
la réception (101) d'une demande par un service distant pour un ou plusieurs services à déployer dans un ou plusieurs environnements de conteneur sur une connexion sécurisée depuis un demandeur, dans lequel la demande pour les un ou plusieurs services comprend une première information de configuration des un ou plusieurs environnements de conteneur,
le lancement (102), dans le service distant, d'un environnement d'exécution pour les un ou plusieurs environnements de conteneur à déployer dedans sur la base de la première information de configuration,
la création (103) dans le service distant d'identifiants et d'un lien utilisant les une ou plusieurs ressources de déploiement pour accéder de manière sécurisée à l'environnement d'exécution lancé,
la fourniture (104) depuis le service distant des identifiants et du lien créés au demandeur,
la réception (105), dans l'environnement d'exécution lancé dans le service distant, des un ou plusieurs services et d'une deuxième information de configuration,
le lancement (106), dans l'environnement d'exécution lancé dans le service distant, des un ou plusieurs environnements de conteneur avec les un ou plusieurs services reçus sur la base de la deuxième information de configuration,
le lancement (107), dans l'environnement d'exécution lancé dans le service distant, d'un moteur de génération de profil pour générer un profil de protection pour les un ou plusieurs environnements de conteneur,
la génération (108), utilisant le moteur de génération de profil lancé dans le service distant, du profil de protection dynamiquement pour les un ou plusieurs environnements de conteneur, et
la fourniture (110) du profil de protection généré au demandeur en réponse à la génération du profil de protection.

2. Procédé selon la revendication 1, dans lequel la génération du profil de protection dynamiquement pour les un ou plusieurs environnements de conteneur comprend la vérification de la fonctionnalité des un ou plusieurs services pendant une période de traçage.

3. Procédé selon la revendication 2, dans lequel la vérification de la fonctionnalité des un ou plusieurs services comprend la collecte d'informations comme base pour générer des règles d'accès pour les un ou plusieurs environnements de conteneur.

4. Procédé selon l'une quelconque des revendications 1 à 3, comprenant en outre le stockage temporaire (109) du profil de protection généré et la suppression de l'environnement d'exécution lancé en réponse à la génération du profil de protection.

5. Procédé selon l'une quelconque des revendications 1 à 4, comprenant en outre l'application (111), utilisant les une ou plusieurs ressources de déploiement, du profil de protection fourni pour les un ou plusieurs environnements de conteneur lorsque les un ou plusieurs services sont en cours de déploiement dans les un ou plusieurs environnements de conteneur soit localement, soit à distance dans un environnement de cloud.

6. Procédé selon l'une quelconque des revendications 1 à 5, dans lequel l'environnement d'exécution comprend une ou plusieurs machines virtuelles, VM.

7. Procédé selon l'une quelconque des revendications 1 à 6, dans lequel les règles d'accès définies dans le profil de protection comprennent un contrôle d'accès obligatoire, MAC, pour les un ou plusieurs environnements de conteneur, dans lequel le MAC amène un module de sécurité de noyau d'un système d'exploitation à contraindre l'accès depuis les un ou plusieurs environnements de conteneur aux objets du système d'exploitation.

8. Produit programme informatique comprenant un support lisible par ordinateur non transitoire, ayant sur celui-ci un programme informatique comprenant des instructions de programme, le programme informatique étant chargeable dans une unité de traitement de données et configuré pour provoquer la réalisation du procédé selon l'une quelconque des revendications 1 à 7 lorsque le programme informatique est exécuté par l'unité de traitement de données.

9. Appareil pour générer un profil de protection pour un ou plusieurs environnements de conteneur à déployer dans un environnement d'exécution dans un service distant utilisant une ou plusieurs ressources de déploiement, dans lequel le profil de protection définit des règles d'accès pour les un ou plusieurs environnements de conteneur, l'appareil comprenant un circuit de commande configuré pour provoquer :
la réception d'une demande pour un ou plusieurs services à déployer dans un ou plusieurs environnements de conteneur sur une connexion sécurisée depuis un demandeur, dans lequel la demande pour les un ou plusieurs services comprend une première information de configuration des un ou plusieurs environnements de conteneur,
le lancement d'un environnement d'exécution pour les un ou plusieurs environnements de conteneur à déployer dedans sur la base de la première information de configuration,
la création d'identifiants et d'un lien utilisant les une ou plusieurs ressources de déploiement pour accéder de manière sécurisée à l'environnement d'exécution lancé,
la fourniture des identifiants et du lien créés au demandeur,
la réception, dans l'environnement d'exécution lancé, des un ou plusieurs services et d'une deuxième information de configuration,
le lancement, dans l'environnement d'exécution lancé, des un ou plusieurs environnements de conteneur avec les un ou plusieurs services reçus sur la base de la deuxième information de configuration,
le lancement, dans l'environnement d'exécution lancé, d'un moteur de génération de profil pour générer un profil de protection pour les un ou plusieurs environnements de conteneur,
la génération, utilisant le moteur de génération de profil lancé, du profil de protection dynamiquement pour les un ou plusieurs environnements de conteneur, et
la fourniture du profil de protection généré au demandeur en réponse à la génération du profil de protection.

10. Appareil selon la revendication 9, dans lequel le circuit de commande est en outre configuré pour provoquer le stockage temporaire du profil de protection généré et la suppression de l'environnement d'exécution lancé en réponse à la génération du profil de protection.

11. Appareil selon la revendication 9 ou 10, dans lequel le circuit de commande est en outre configuré pour provoquer, utilisant les une ou plusieurs ressources de déploiement, l'application du profil de protection fourni pour les un ou plusieurs environnements de conteneur lorsque les un ou plusieurs services sont en cours de déploiement dans les un ou plusieurs environnements de conteneur soit localement, soit à distance dans l'environnement de cloud.

12. Serveur comprenant l'appareil selon l'une quelconque des revendications 9 à 11.

13. Environnement de cloud comprenant l'appareil selon l'une quelconque des revendications 9 à 11 et/ou le serveur selon la revendication 12.
